# EUROPEAN PATENT APPLICATION

(11) **EP 4 163 848 A1**
(43) Date of publication of application: **12.04.2023**
(21) Application number: 20938938.6
(22) Date of filing: 04.06.2020
(51) Int. Cl.: G06Q 10/10

(54) **CONTROL METHOD, INFORMATION PROCESSING DEVICE, AND CONTROL PROGRAM**

(71) Applicant: Fujitsu Limited, Kawasaki-shi, Kanagawa 211-8588 (JP)
(72) Inventor: NAKAMURA, Yosuke, Kawasaki-shi, Kanagawa 211-8588 (JP); YASAKI, Koichi, Kawasaki-shi, Kanagawa 211-8588 (JP); YAMAMOTO, Dai, Kawasaki-shi, Kanagawa 211-8588 (JP)
(74) Representative: Hoffmann Eitle
(86) International application number: PCT/JP2020/022148
(87) International publication number: WO 2021/245887

(57) **Abstract**

Contract document data including a company name and a job title name of a person with an authority of a contract partner company is acquired, information (103) is acquired that indicates a decision ability associated with the company name and the job title name included in the acquired contract document data, with reference to a storage unit that stores information (141) that indicates a plurality of kinds of decision abilities for each job title of a company in association with the company name and the job title name, and the acquired information (103) is presented that indicates the decision ability, in association with the acquired contract document data.

## Description

### FIELD

The present invention relates to a control method, an information processing apparatus, and a control program.

### BACKGROUND

There is an electronic contract without face-to-face contract conclusion between companies.

### SUMMARY

### TECHNICAL PROBLEM

However, unlike an in-person contract, an electronic contract has a problem in that determination whether or not a trading partner or transaction content is reliable is not easy. For example, there is a countermeasure technique of two-factor authentication, encryption, or the like against fraud of a third party. However, there is a possibility that it is not possible to prevent or notice the fraud when the trading partner commits the fraud.

In one aspect, an object of the technology disclosed herein is to more accurately display a decision ability of a person with an authority included in a contract document.

### SOLUTION TO PROBLEM

In one aspect, a control method acquires contract document data including a company name and a job title name of a person with an authority of a contract partner company, acquires information that indicates a decision ability associated with the company name and the job title name included in the acquired contract document data, with reference to a storage unit that stores information that indicates a plurality of kinds of decision abilities for each job title of a company in association with the company name and the job title name, and presents the acquired information that indicates the decision ability, in association with the acquired contract document data.

### ADVANTAGEOUS EFFECTS OF INVENTION

According to a disclosed control method, it is possible to more accurately display a decision ability of a person with an authority included in a contract document.

### BRIEF DESCRIPTION OF DRAWINGS

FIG. 1 is a block diagram schematically illustrating a configuration example of an authority verification system in an example of an embodiment;
FIG. 2 is a block diagram schematically illustrating a hardware configuration example of an authority verification device illustrated in FIG. 1;
FIG. 3 is a table illustrating inter-company authority conversion information in the authority verification device illustrated in FIG. 1;
FIG. 4 is a table illustrating a job title dictionary in the authority verification device illustrated in FIG. 1;
FIG. 5 is a diagram for explaining transaction history collection processing by the authority verification device illustrated in FIG. 1;
FIG. 6 (i.e., FIGs. 6A and 6B) is a diagram for explaining a specific example of transaction history generation processing by the authority verification device illustrated in FIG. 1;
FIG. 7 is a diagram for explaining inter-company authority conversion information generation processing by the authority verification device illustrated in FIG. 1;
FIG. 8 (i.e., FIGs. 8A and 8B) is a diagram for explaining a specific example of transaction history scrutiny processing according to personnel information by the authority verification device illustrated in FIG. 1;
FIG. 9 (i.e., FIGs. 9A and 9B) is a diagram for explaining a specific example of transaction history scrutiny processing according to a contract amount by the authority verification device illustrated in FIG. 1;
FIG. 10 (i.e., FIGs. 10A and 10B) is a diagram for explaining a specific example of transaction history scrutiny processing according to the job title dictionary by the authority verification device illustrated in FIG. 1;
FIG. 11 is a diagram for explaining a specific example of transaction history scrutiny processing according to court information by the authority verification device illustrated in FIG. 1;
FIG. 12 is a sequence diagram for explaining authority information determination processing by the authority verification device illustrated in FIG. 1;
FIG. 13 is a sequence diagram for explaining authority information disclosure control processing by the authority verification device illustrated in FIG. 1;
FIG. 14 is a diagram for explaining authority information presentation processing by the authority verification device illustrated in FIG. 1;
FIG. 15 is a diagram illustrating an approval path verification illustration in a case where there is a problem possibility of a contract document in the authority verification device illustrated in FIG. 1;
FIG. 16 is a diagram illustrating an approval path verification illustration in a case where there is no problem possibility of the contract document in the authority verification device illustrated in FIG. 1;
FIG. 17 is a diagram for explaining processing for converting authority information from job title display into amount display by the authority verification device illustrated in FIG. 1;
FIG. 18 is a diagram illustrating a first example of range display of the authority information by the authority verification device illustrated in FIG. 1;
FIG. 19 is a diagram illustrating a second example of the range display of the authority information by the authority verification device illustrated in FIG. 1;
FIG. 20 is a flowchart for explaining the authority information determination processing by the authority verification device illustrated in FIG. 1; and
FIG. 21 is a flowchart for explaining the authority information disclosure control processing by the authority verification device illustrated in FIG. 1.

### DESCRIPTION OF EMBODIMENTS

Hereinafter, an embodiment will be described with reference to the drawings. Note that the embodiment to be described below is merely an example, and there is no intention to exclude application of various modifications and techniques not explicitly described in the embodiment. The present embodiment may be modified in various ways to be implemented without departing from the spirit thereof.

Furthermore, each drawing is not intended to include only components illustrated in the drawing, and may include another function or the like.

Hereinafter, parts denoted by the same reference sign indicate similar parts in the drawings.

### [A] Example of Embodiment

### [A-1] System Configuration Example

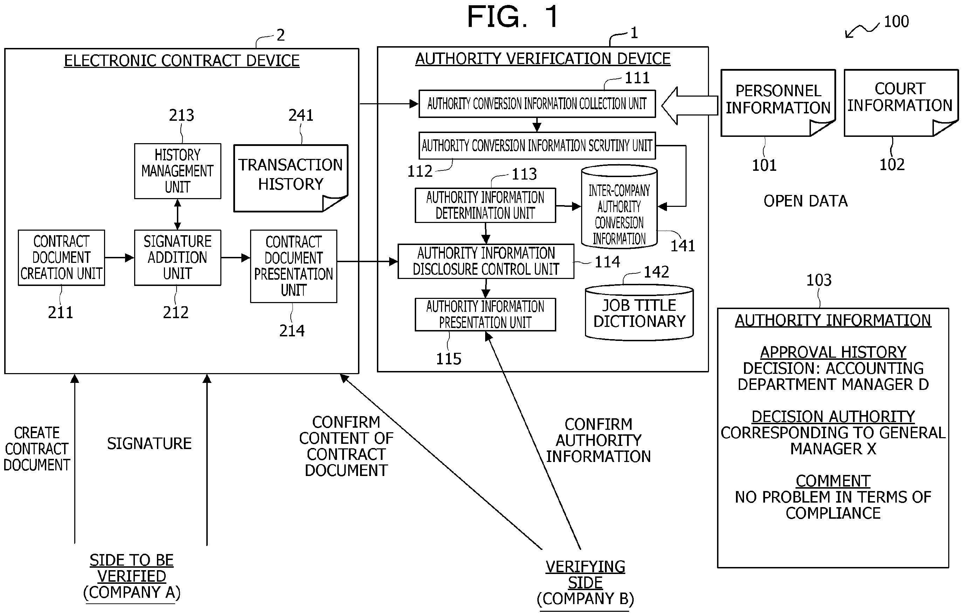

FIG. 1 is a block diagram schematically illustrating a configuration example of an authority verification system 100 in an example of an embodiment.

The authority verification system 100 includes an authority verification device 1 and an electronic contract device 2.

The electronic contract device 2 is a device that concludes an electronic contract between companies (in illustrated example, between companies A and B) and functions as a contract document creation unit 211, a signature addition unit 212, a history management unit 213, and a contract document presentation unit 214.

The contract document creation unit 211 creates a contract document concluded between companies, in response to a request from a company on a side of which a contract authority is verified (in illustrated example, company A).

The signature addition unit 212 adds an electronic signature to the contract document created by the contract document creation unit 211, in response to a request from the company on the side of which the contract authority is verified.

The history management unit 213 manages an approval history of the contract document created by the contract document creation unit 211.

The contract document presentation unit 214 presents the contract document, to which the electronic signature is added by the signature addition unit 212, to the authority verification device 1 in a viewable manner. As a result, a company on a side that verifies the contract authority (in illustrated example, company B) can confirm content of the contract document.

Furthermore, the electronic contract device 2 inputs a history of contract document conclusions in the past in the authority verification device 1, as a transaction history 241.

The authority verification device 1 is an example of an information processing apparatus and is a device that verifies a contract authority of the contract document generated by the electronic contract device 2. The authority verification device 1 functions as an authority conversion information collection unit 111, an authority conversion information scrutiny unit 112, an authority information determination unit 113, an authority information disclosure control unit 114, and an authority information presentation unit 115. Furthermore, the authority verification device 1 holds inter-company authority conversion information 141 and a job title dictionary 142.

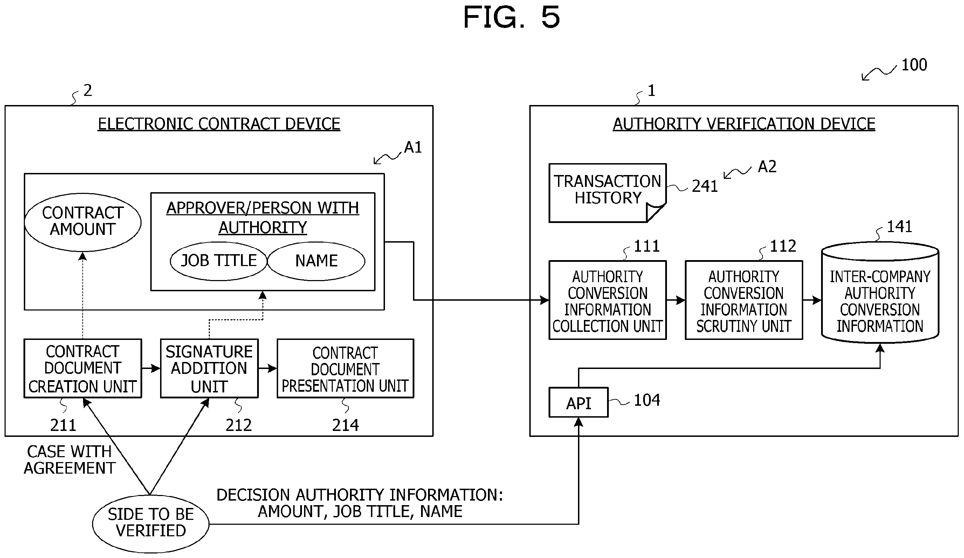

The authority conversion information collection unit 111 collects the transaction history 241 output from the electronic contract device 2 and personnel information 101 and court information 102 that are open data. Details of processing for collecting the transaction history 241 will be described later with reference to FIG. 5 or the like.

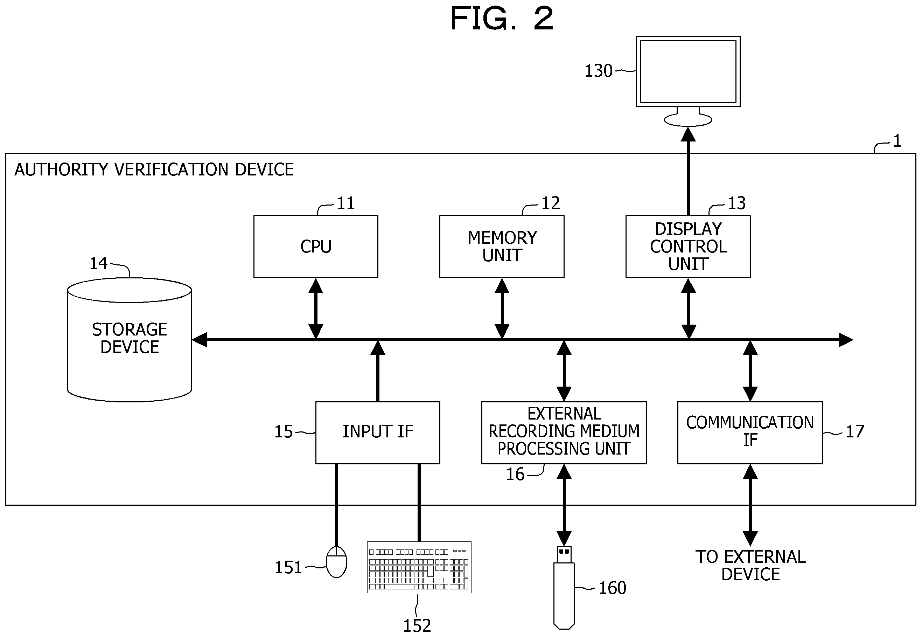

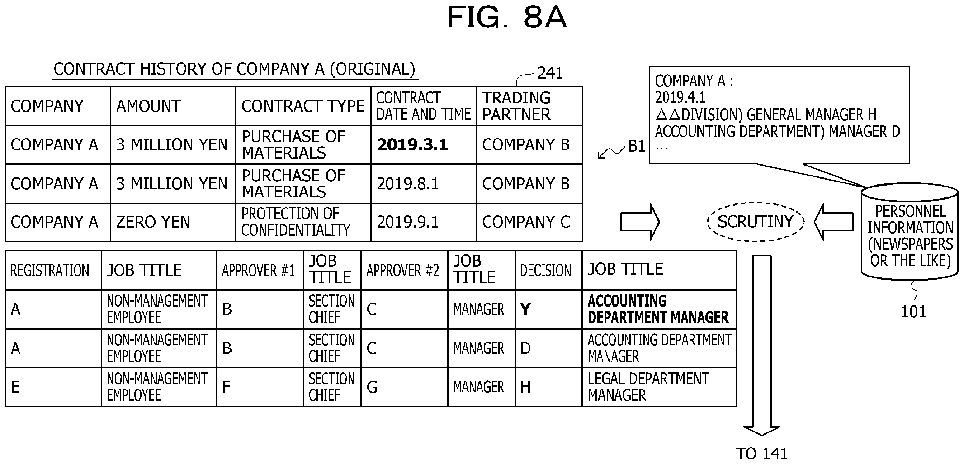

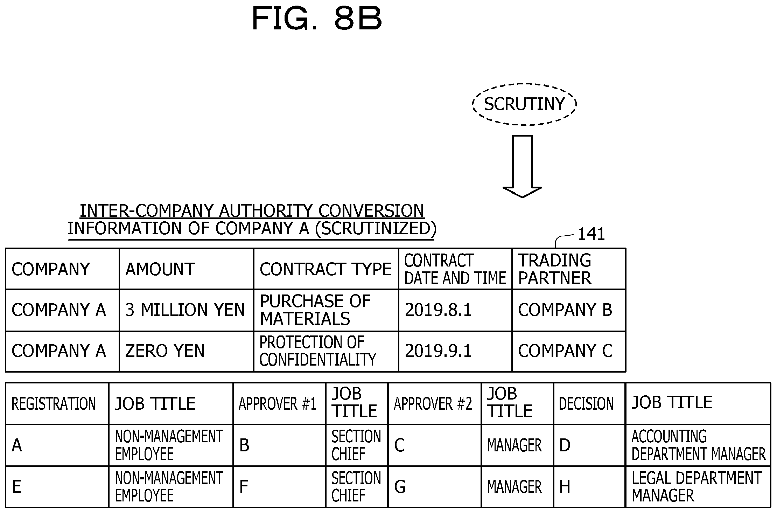

The authority conversion information collection unit 111 scrutinizes the transaction history 241 based on the personnel information 101 and the court information 102, and stores the transaction history 241 in a storage device 14 (to be described later with reference to FIG. 2) as the inter-company authority conversion information 141. Details of processing for scrutinizing the transaction history 241 will be described later with reference to FIGs. 8 to 11 or the like.

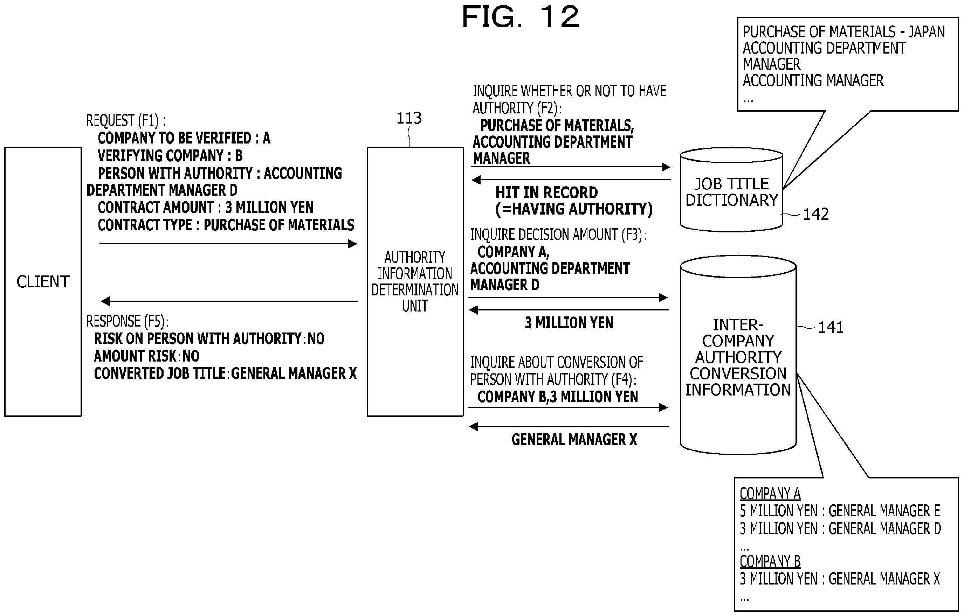

The authority information determination unit 113 determines whether or not the contract authority of the contract document input by the electronic contract device 2 has a problem, based on the inter-company authority conversion information 141. The processing for determining whether or not the contract authority has a problem will be described later with reference to FIG. 12 or the like.

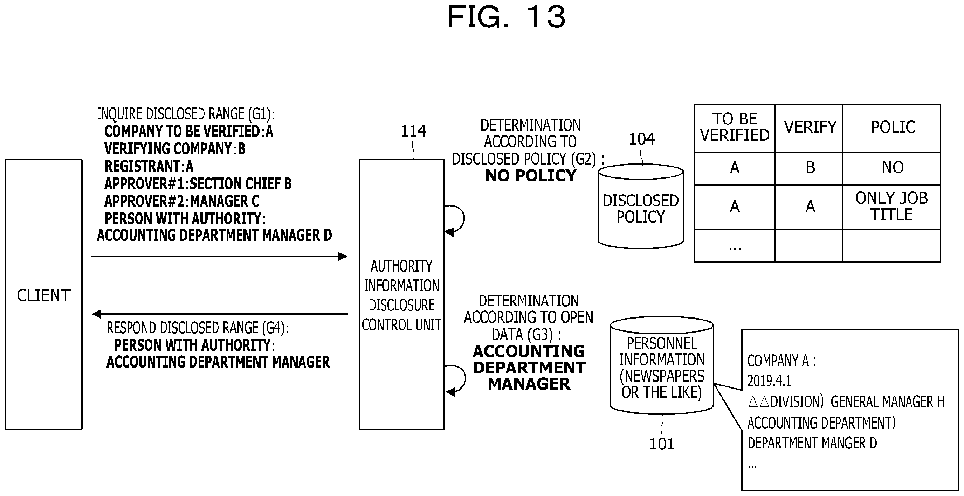

The authority information disclosure control unit 114 controls disclosed content of authority information 103, based on agreements between companies and the personnel information 101. The processing for controlling the disclosed content will be described later with reference to FIG. 13 or the like.

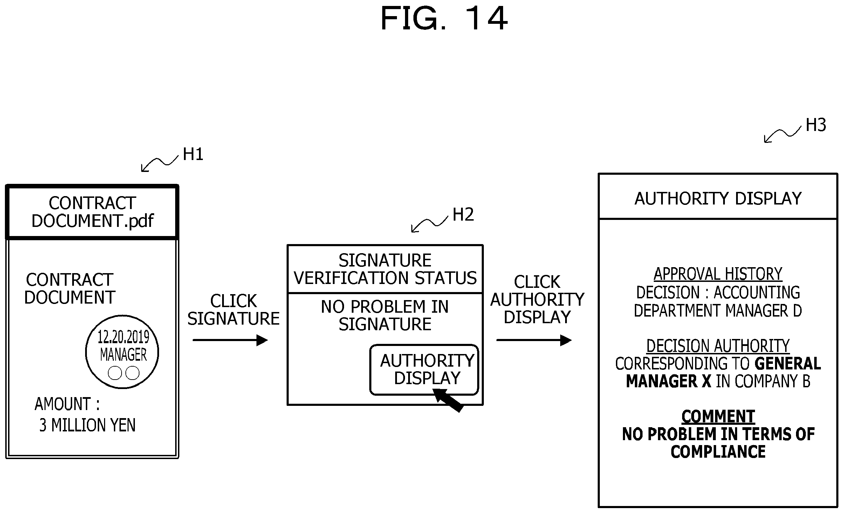

The authority information presentation unit 115 presents the authority information 103 used for confirmation by the company on the verifying side. Details of the processing for presenting the authority information 103 will be described later with reference to FIGs. 14 to 19 or the like.

As illustrated in FIG. 1, the authority information 103 is information indicating validity of an authority of a contract, and may include an approval history, a decision authority, and comments. The approval history indicates a person with an authority of a contract document and is "decision: accounting department manager D" in the illustrated example. The decision authority indicates a job title of a company on an approving side corresponding to the person with an authority of the company on the side to be verified and "corresponds to general manager X" in the illustrated example. The comment indicates whether or not a contract authority of a contract document has a problem and is "no problem in terms of compliance" in the illustrated example.

FIG. 2 is a block diagram schematically illustrating a hardware configuration example of the authority verification device 1 illustrated in FIG. 1.

As illustrated in FIG. 2, the authority verification device 1 includes a central processing unit (CPU) 11, a memory unit 12, a display control unit 13, a storage device 14, an input interface (IF) 15, an external recording medium processing unit 16, and a communication IF 17.

The memory unit 12 is an example of a storage unit, which is, for example, a read only memory (ROM), a random access memory (RAM), or the like. Programs of a basic input/output system (BIOS) or the like may be written in the ROM of the memory unit 12. A software program of the memory unit 12 may be appropriately read and executed by the CPU 11. Furthermore, the RAM of the memory unit 12 may be used as a temporary recording memory or a working memory.

The display control unit 13 is connected to a display device 130, and controls the display device 130. The display device 130 is a liquid crystal display, an organic light-emitting diode (OLED) display, a cathode ray tube (CRT), an electronic paper display, or the like, and displays various kinds of information for an operator or the like. The display device 130 may be combined with an input device, and may be, for example, a touch panel.

The storage device 14 is a storage device with high input/output (I/O) performance, and for example, a hard disk drive (HDD), a solid state drive (SSD), or a storage class memory (SCM) may be used. The storage device 14 stores at least some entries in stream data. A plurality of the storage devices 14 may be provided depending on the number of extraction processes performed on the stream data.

The input IF 15 may be connected to an input device such as a mouse 151 and a keyboard 152, and may control the input device such as the mouse 151 and the keyboard 152. The mouse 151 and the keyboard 152 are exemplary input devices, and the operator performs various input operations through those input devices.

The external recording medium processing unit 16 is configured so that the recording medium 160 can be attached thereto. The external recording medium processing unit 16 is configured in such a manner that information recorded in the recording medium 160 is allowed to be read in a state in which the recording medium 160 is attached to the external recording medium processing unit 16. In the present example, the recording medium 160 is portable. For example, the recording medium 160 is a flexible disk, an optical disk, a magnetic disk, a magneto-optical disk, a semiconductor memory, or the like.

The communication IF 17 is an interface that enables communication with an external device.

The CPU 11 is a processor that performs various kinds of control and calculation, and implements various functions by executing an operating system (OS) and programs stored in the memory unit 12.

The device for controlling the operation of the entire authority verification device 1 is not limited to the CPU 11 and may be, for example, any one of an MPU, a DSP, an ASIC, a PLD, or an FPGA. Furthermore, the device for controlling the operation of the entire authority verification device 1 may be a combination of two types or more of the CPU, MPU, DSP, ASIC, PLD, or FPGA. Note that the MPU is an abbreviation for a micro processing unit, the DSP is an abbreviation for a digital signal processor, and the ASIC is an abbreviation for an application specific integrated circuit. Furthermore, the PLD is an abbreviation for a programmable logic device, and the FPGA is an abbreviation for a field-programmable gate array.

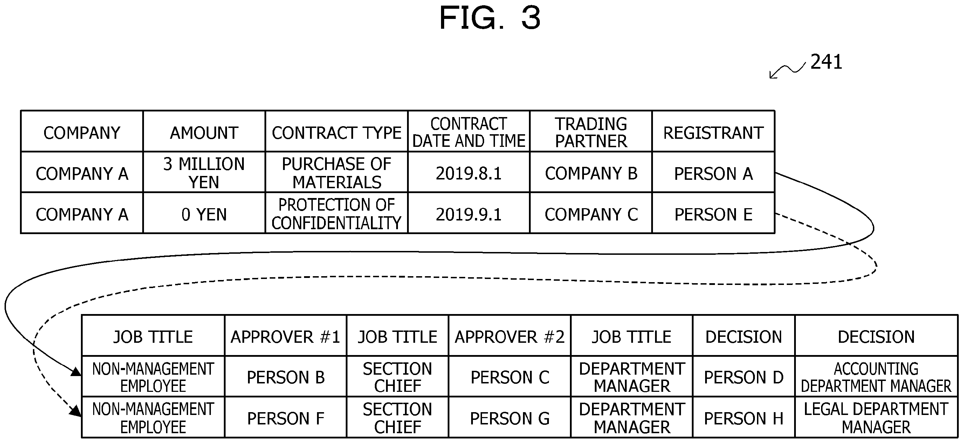

FIG. 3 is a table illustrating the inter-company authority conversion information 141 in the authority verification device 1 illustrated in FIG. 1.

The inter-company authority conversion information 141 is information used to match decision authority job titles (in other words, names) between different companies. As illustrated in FIG. 3, the inter-company authority conversion information 141 includes, for example, a company name, an amount, a contract type, a contract date and time, a trading partner, and approval flow information. The approval flow information includes names and job titles of a registrant, an approver, and a person with an authority.

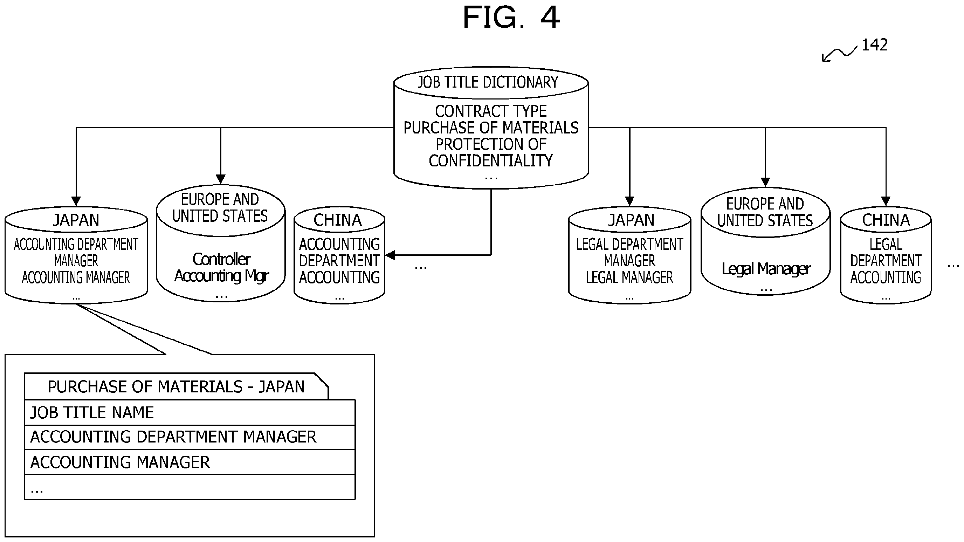

FIG. 4 is a table illustrating the job title dictionary 142 in the authority verification device 1 illustrated in FIG. 1.

The job title dictionary 142 is a job title name list used to estimate presence or absence of a final decision authority regarding a contract. In the job title dictionary 142, a job title that is estimated to have an authority is registered for each contract type (for example, purchase of materials or protection of confidentiality) or for each country or region.

In the job title dictionary 142, a plurality of job title names may be registered, in consideration of conversion of job title names in international transactions or fluctuations of names between companies. For example, it is assumed that an accounting department manager in the company A corresponds to an accounting manager in the company B.

FIG. 5 is a diagram for explaining processing for collecting the transaction history 241 by the authority verification device 1 illustrated in FIG. 1.

The authority conversion information collection unit 111 collects the transaction history 241 of the company as decision authority information.

In a case where the company on the side of which the authority is verified provides the decision authority information such as an amount, a job title, or a name, an application programming interface (API) 104 may be disclosed by the authority verification device 1.

In a case where the company on the side of which the authority is verified does not provide the decision authority information, as indicated by a reference A1, a contract amount and an approval flow (for example, job title and name of approver or convened person with an authority) may be extracted from the electronic contract device 2. Then, as indicated by a reference A2, the authority verification device 1 acquires the transaction history 241. Note that the contract amount and the approval flow may be provided from a cooperating bank or the like.

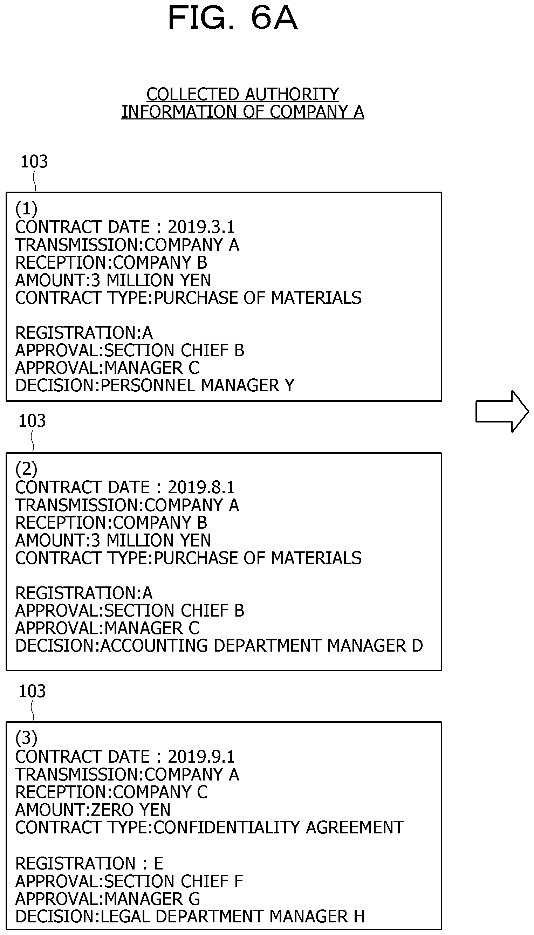

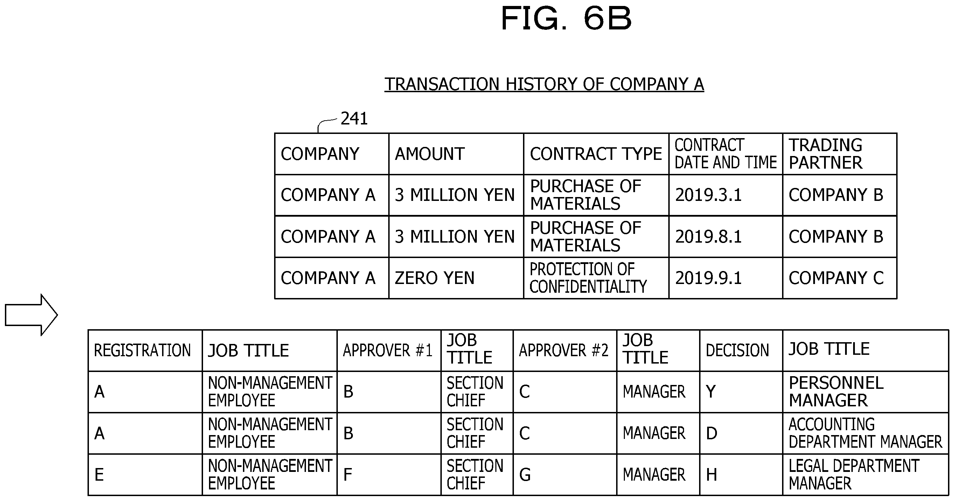

FIG. 6 (i.e., FIGs. 6A and 6B) is a diagram for explaining a specific example of the processing for generating the transaction history 241 by the authority verification device 1 illustrated in FIG. 1.

The transaction history 241 may be generated by the authority verification device 1 or the electronic contract device 2, from the collected authority information 103 of the contract document.

In the illustrated example, the transaction history 241 is generated from three pieces (1) to (3) of authority information 103. In each piece of the authority information 103, information same as the transaction history 241 is included, and a contract date, a transmitting company, a receiving company, an amount, a registrant, an approver, and a person with an authority are included. Job titles and names of the registrant, the approver, and the person with an authority may be referred to as the approval flow information.

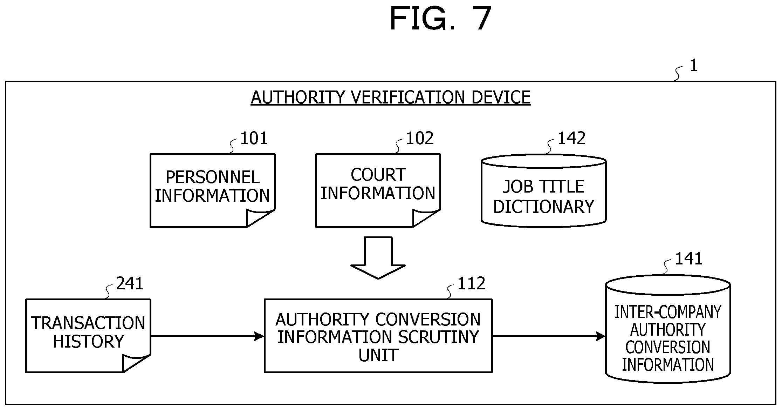

FIG. 7 is a diagram for explaining processing for generating the inter-company authority conversion information 141 by the authority verification device 1 illustrated in FIG. 1.

The authority conversion information scrutiny unit 112 extracts information that is currently valid and reliable by scrutinizing the transaction history 241, based on the personnel information 101, the court information 102, and the job title dictionary 142 and generates the inter-company authority conversion information 141.

For example, information including a currently latest job title may be extracted. Furthermore, for the same contract, information including the highest amount may be extracted. Moreover, a contract decided by a job title estimated to have a decision authority may be extracted. Furthermore, a contract that is estimated to be amicable after the contract such as a contract with no corresponding data in the court information 102 may be extracted.

FIG. 8 (i.e., FIGs. 8A and 8B) is a diagram for explaining a specific example of processing for scrutinizing the transaction history 241 according to the personnel information 101 by the authority verification device 1 illustrated in FIG. 1.

The authority conversion information scrutiny unit 112 may extract data of which information regarding the job title is the latest from the transaction history 241, with reference to the personnel information 101 of the company in newspapers or the like.

In the illustrated example, as indicated by a reference B1, a transaction decided by a previous accounting department manager Y on March 1, 2019 before April 1, 2019 that is a job title change date registered in the personnel information 101 is deleted from the transaction history 241, and the scrutinized inter-company authority conversion information 141 is registered.

In other words, the authority conversion information scrutiny unit 112 is an example of a deletion processing unit that deletes data regarding the contract according to personnel affairs in the past, from information indicating a plurality of kinds of decision abilities, based on the personnel information 101.

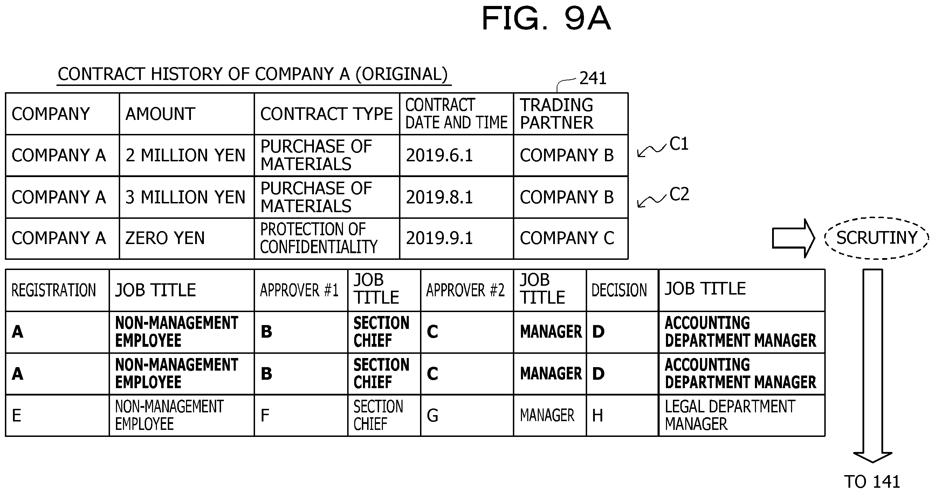

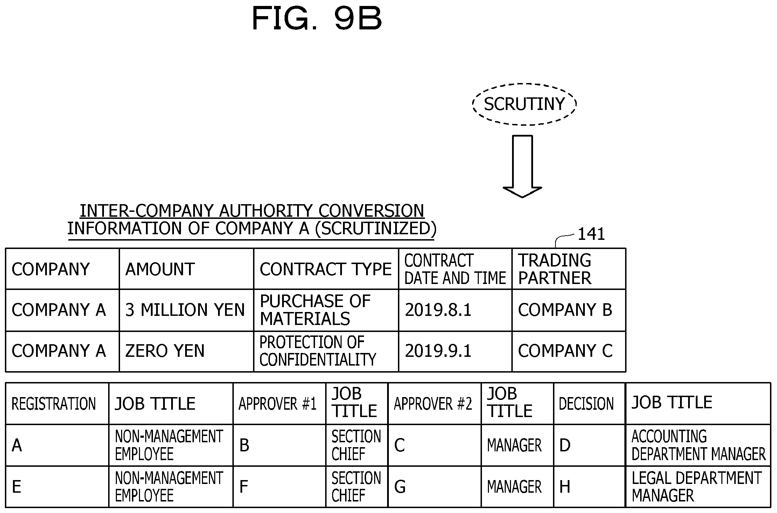

FIG. 9 (i.e., FIGs. 9A and 9B) is a diagram for explaining a specific example of processing for scrutinizing the transaction history 241 according to the contract amount by the authority verification device 1 illustrated in FIG. 1.

The authority conversion information scrutiny unit 112 may extract data with the highest amount from the transaction history 241, for contracts having the same approval path.

In the illustrated example, although a transaction indicated by a reference C1 has the same approval path (in other words, registrant, approver, and person with an authority) as a transaction indicated by a reference C2, the transaction indicated by the reference C1 has a lower amount than a transaction indicated by a reference B2. Therefore, the transaction indicated by the reference C1, with the lower amount is deleted from the transaction history 241, and the scrutinized inter-company authority conversion information 141 is registered.

In other words, the authority conversion information scrutiny unit 112 is an example of a deletion processing unit that deletes data other than data regarding a contract with the highest contract amount in a case where a plurality of pieces of data regarding the contract having the same approval path is included in the information indicating the plurality of kinds of decision abilities.

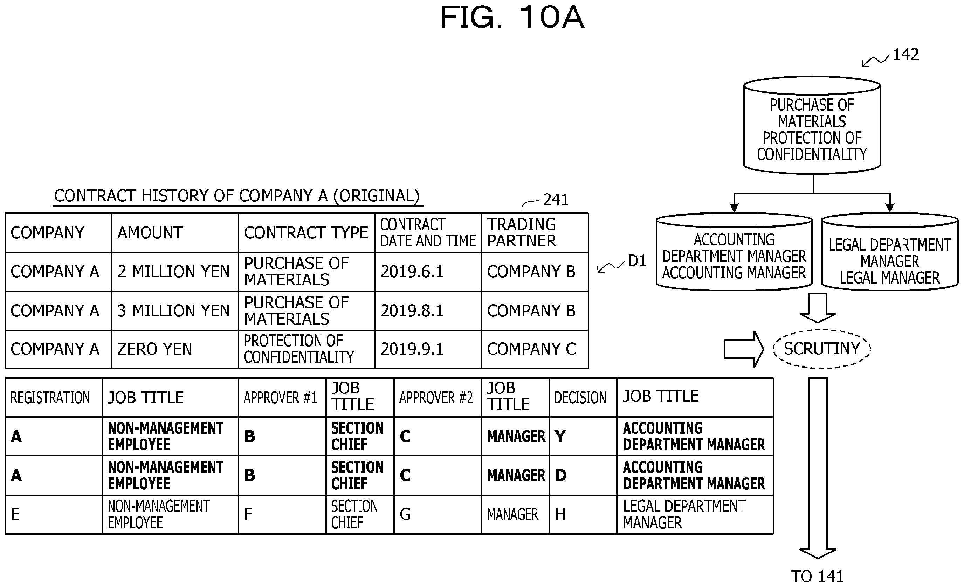

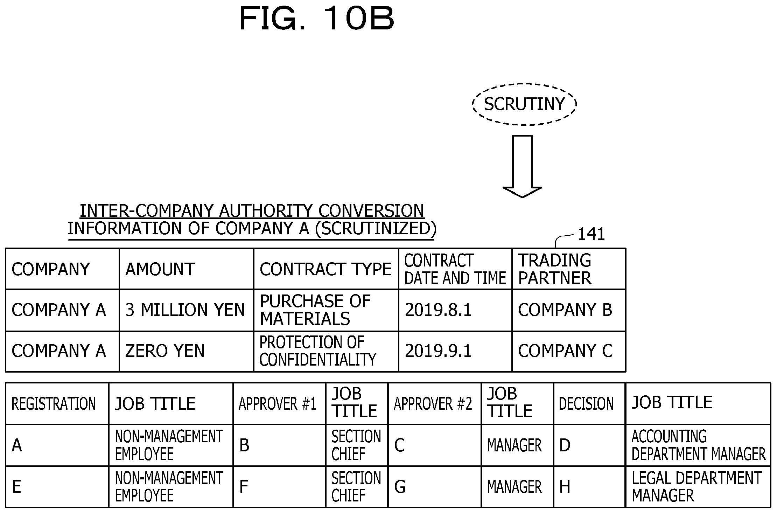

FIG. 10 (i.e., FIGs. 10A and 10B) is a diagram for explaining a specific example of processing for scrutinizing the transaction history 241 according to the job title dictionary 142 by the authority verification device 1 illustrated in FIG. 1.

The authority conversion information scrutiny unit 112 recognizes that a contract made by a person with no decision authority as a transaction with a risk of contract cancellation, and may extract a transaction for which decision has been made by a job title estimated to have a decision authority, with reference to the job title dictionary 142.

In the illustrated example, for a transaction indicated by a reference D1, a personnel manager that is the job title of the person with the authority is not registered in the job title dictionary 142. Therefore, the transaction indicated by the reference D1 that is estimated to be made by a person with no decision authority is deleted from the transaction history 241, and the scrutinized inter-company authority conversion information 141 is registered.

In other words, the authority conversion information scrutiny unit 112 is an example of a deletion processing unit that deletes data regarding the contract made by the job title that is estimated to have no contract authority from the information indicating the plurality of kinds of decision abilities.

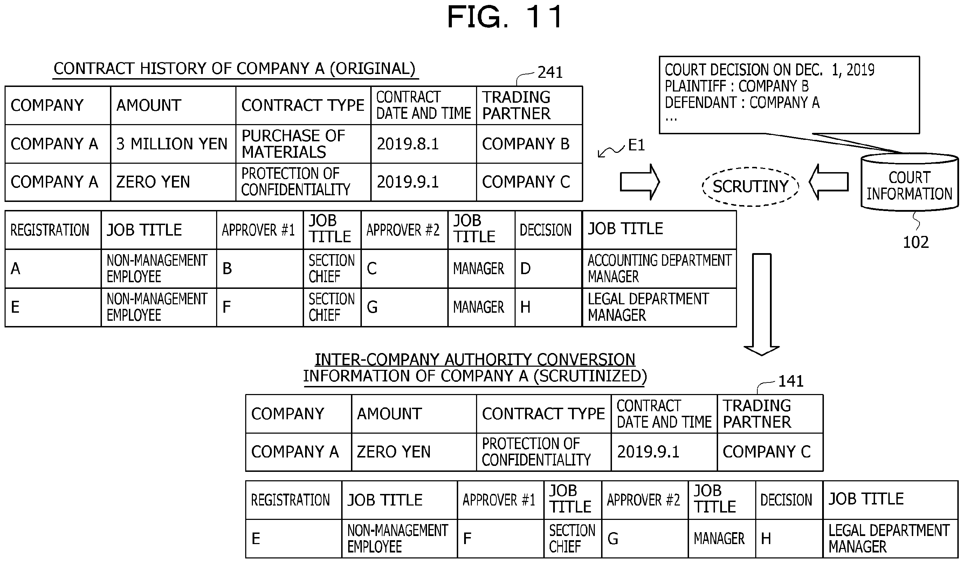

FIG. 11 is a diagram for explaining a specific example of processing for scrutinizing the transaction history 241 according to the court information 102 by the authority verification device 1 illustrated in FIG. 1.

The authority conversion information scrutiny unit 112 may extract a contract that is concluded with no problems and is estimated to be amicable after the contract, with reference to the court information 102. In other words, the authority conversion information scrutiny unit 112 may delete a transaction for which a trial has been conducted after contract from the transaction history 241 and generate the inter-company authority conversion information 141. Furthermore, the authority conversion information scrutiny unit 112 may assume that there is a possibly that a contract with which the transaction is not made for a certain period has had a problem and delete the contract from the transaction history 241, and generate the inter-company authority conversion information 141.

In the illustrated example, a transaction indicated by a reference E1 is a transaction between the company A and the company B included in the court information 102 of the court, and the judgment date in the court information 102 is later than a contract date and time. Therefore, the transaction that is indicated by the reference E1 and is estimated to have a problem is deleted from the transaction history 241, and the scrutinized inter-company authority conversion information 141 is registered.

In other words, the authority conversion information scrutiny unit 112 is an example of a deletion processing unit that deletes data regarding a contract for which a conflict occurs, from the information indicating the plurality of kinds of decision abilities, with reference to the court information 102.

FIG. 12 is sequence diagram for explaining authority information determination processing by the authority verification device 1 illustrated in FIG. 1.

The authority information determination unit 113 may determine a risk of a contract from information regarding a person with a final authority or the like, replace the person with the final authority or the like with the job title of the company on the side for verifying an authority, and present the job title.

The authority information determination unit 113 receives an authority verification request from a client, using contract information as an input (refer to reference F1). The contract information includes, for example, a company to be verified, a verifying company, a person with an authority, a contract amount, and a contract type.

The authority information determination unit 113 inquires the contract type included in the authority verification request and whether or not the person with the authority has an authority with respect to the job title dictionary 142 and determines that the person has the authority if a record hits (refer to reference F2).

The authority information determination unit 113 inquires a decision amount for the company to be verified and the person with the authority included in the authority verification request, with respect to the inter-company authority conversion information 141, and acquires the decision amount (refer to reference F3).

In order to convert the job title of the person with the authority of the company on the side to be verified into the job title of the company on the verifying side, the authority information determination unit 113 inquires a job title corresponding to the decision amount acquired by the company on the side for performing conversion with respect to the inter-company authority conversion information 141 (refer to reference F4). In the illustrated example, general manager X is acquired.

The authority information determination unit 113 responds whether or not there is a risk of a person with an authority and an amount risk and the converted job title, to the client (refer to reference F5).

In other words, the authority information determination unit 113 is an example of a first acquisition unit that acquires contract document data including a contract partner company name and a job title name of a person with an authority. Furthermore, the authority information determination unit 113 is an example of a second acquisition unit that refers to the storage device 14 that stores the information indicating the plurality of kinds of decision abilities in association with the company name and the job title name for each job title of the company and acquires information indicating a decision ability associated with the company name and the job title name included in the acquired contract document data.

FIG. 13 is a sequence diagram for explaining authority information disclosure control processing by the authority verification device 1 illustrated in FIG. 1.

The authority information disclosure control unit 114 may control information to be presented, in consideration of privacy of the company on the side, of which the authority is verified, in the approval flow, based on the agreement between the trading companies (in other words, policy) and the open personnel information 101. The authority information disclosure control unit 114 may present information as in the policy, if the policy exists between the companies. Furthermore, in a case of no policy, the authority information disclosure control unit 114 may present information disclosed in the personnel information 101 that is open data.

The authority information disclosure control unit 114 receives an inquiry regarding a disclosed range including a company to be verified, a verifying company, a registrant, an approver, a person with an authority, or the like, from the client (refer to reference G1).

The authority information disclosure control unit 114 determines whether or not there is a policy with reference to a disclosed policy 104 (refer to reference G2).

The authority information disclosure control unit 114 determines a job title registered in the personnel information 101 that is open data in newspapers or the like (refer to reference G3).

The authority information disclosure control unit 114 responds the limited disclosed range to the client (refer to reference G4). In the illustrated example, only a person with an authority, from among a registrant, an approver #1, a registrant #2, and the person with the authority included in the disclosed range inquiry, is responded as the disclosed range of the job title.

FIG. 14 is a diagram for explaining authority information presentation processing by the authority verification device 1 illustrated in FIG. 1.

As indicated by references H1 and H2, when an electronic signature portion of a contract document in a portable document format (PDF) viewer is clicked, the authority information presentation unit 115 may display a verification result of the electronic signature in an authority verification status window.

Furthermore, as indicated by a reference H3, when an authority display button is clicked in the verification result of the electronic signature, the authority information presentation unit 115 may display content of the authority information 103 and contract security in an authority display window. In the illustrated example, in the authority display window, an approval history of the company on the side of which the authority is verified, a decision authority that is converted into a job title in the company on the side for verifying the authority, and comments indicating whether or not there is a compliance problem are displayed.

Note that the authority information presentation unit 115 may present the verification result with a web page browser or a dedicated application, not the PDF viewer.

The authority information 103 may be presented by the display device 130 of the authority verification device 1 illustrated in FIG. 2 or may be presented by a display device of a terminal (not illustrated).

In other words, the authority information presentation unit 115 is an example of a presentation unit that presents information indicating the acquired decision ability, in association with the acquired contract document data.

Furthermore, the authority information presentation unit 115 may convert a job title name of the partner company into a corresponding job title name of the own company in the information indicating the decision ability and present the converted job title name.

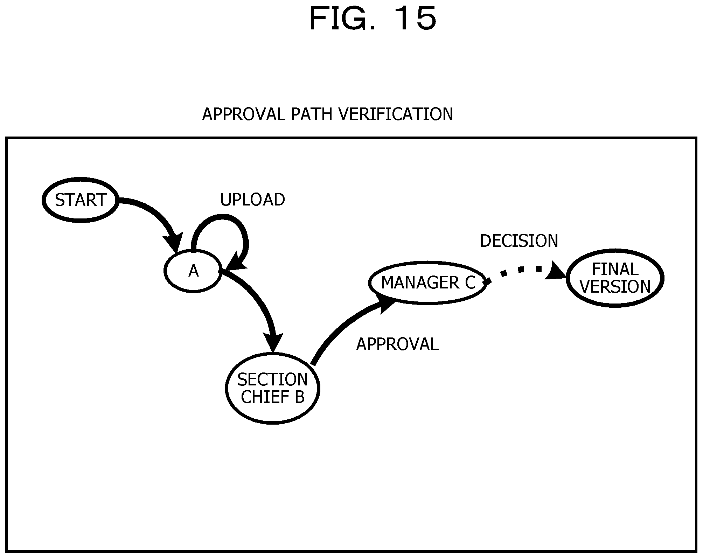

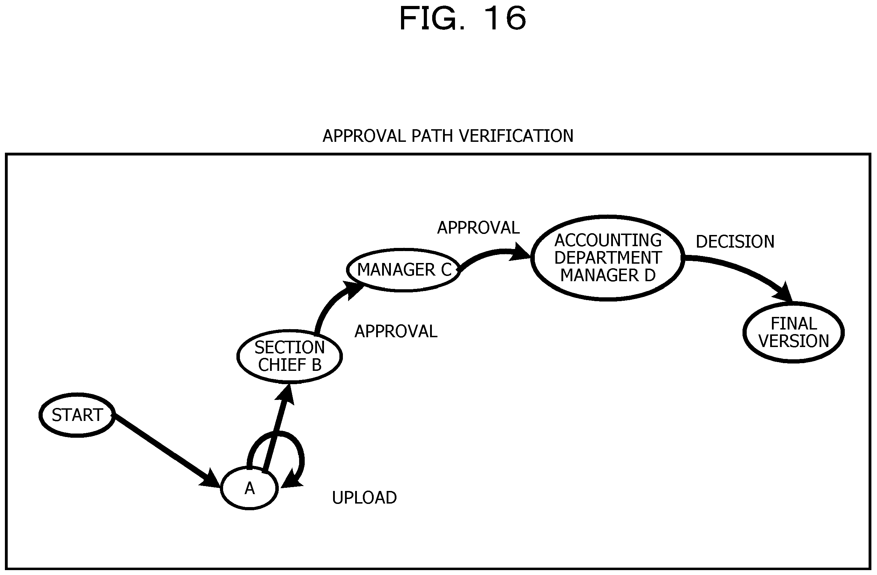

FIG. 15 is a diagram illustrating an approval path verification illustration in a case where there is a problem possibility of a contract document in the authority verification device 1 illustrated in FIG. 1. FIG. 16 is a diagram illustrating an approval path verification illustration in a case where there is no problem possibility of the contract document in the authority verification device 1 illustrated in FIG. 1.

The authority information presentation unit 115 may display the approval history as an illustration so that the approval history can be visually and intuitively perceived. The authority information presentation unit 115 may highlight defects (for example, falsification of documents or errors of approval partner) in the approval history with a specific color or the like, for example, by using the Visjs library.

In the approval path verification illustration illustrated in FIG. 15, when creation of a contract document is started, the contract document is uploaded by a person A and is approved by a section chief B, and then, decision has been made by a manager C, and a final version is completed. Here, since the manager C does not have a decision authority, the decision made by the manager C is highlighted with a dotted arrow, indicating that the decision has a defect.

On the other hand, in the approval path verification illustration illustrated in FIG. 16, when the creation of the contract document is started, the contract document is uploaded by the person A, is approved by the section chief B, and is approved by the manager C, and further, decision has been made by an accounting department manager D, and a final version is completed. Here, since the accounting department manager D has a decision authority, there is no highlighted arrow because the displayed approval path has no defect.

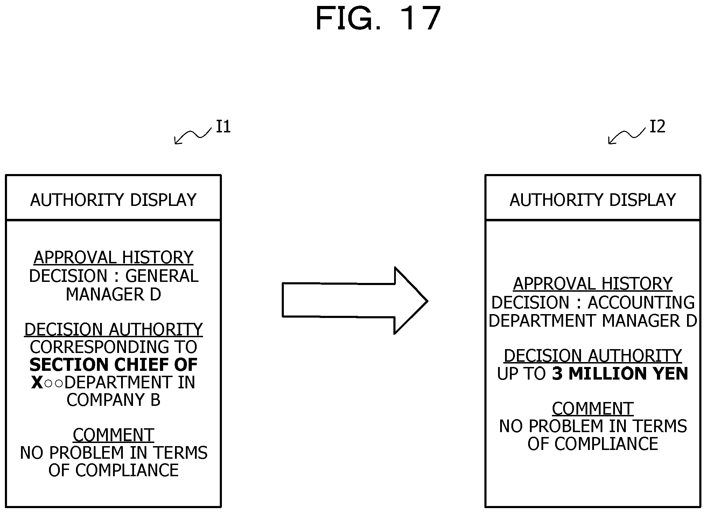

FIG. 17 is a diagram for explaining processing for converting job title display of the authority information 103 into amount display by the authority verification device 1 illustrated in FIG. 1.

In a case where the company on the side of which the authority is verified does not desire to present the job title to the company on the side for verifying the authority, the authority information presentation unit 115 displays the decision authority as an amount, not the job title. One reason for not desiring to present the job title is a case where a large authority difference exists between the job titles, such as a case where a general manager of own company has only an authority corresponding to that of a section chief of a partner company.

In the example indicated by a reference 11, the decision authority is displayed as a job title, as "corresponds to a section chief of a XOO department in the company B". On the other hand, in the example indicated by a reference I2, the decision authority is displayed as an amount, as "upper limit three million yen".

Since the amount is a common standard, it is possible to understand the decision authority in common between companies. Furthermore, whether or not the decision authority is converted may be set according to the disclosed policy 104 illustrated in FIG. 13.

In other words, the authority information presentation unit 115 may further convert the job title name of the own company into a decision limit amount corresponding to the job title name in the information indicating the decision ability and present the decision limit amount.

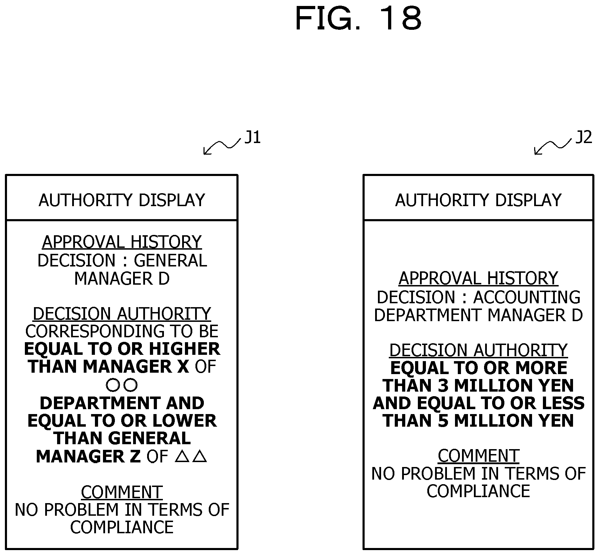

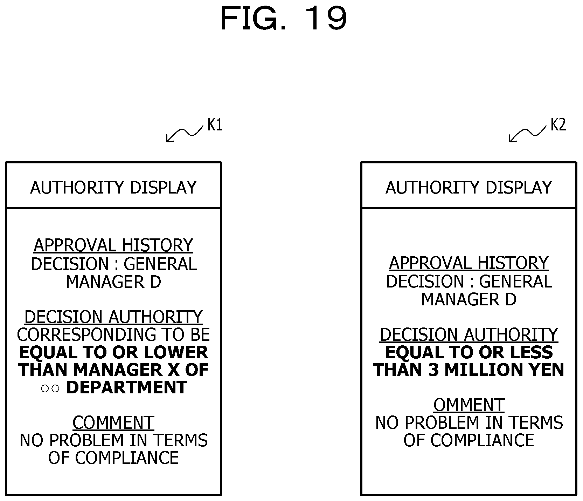

FIG. 18 is a diagram illustrating a first example of range display of the authority information 103 by the authority verification device 1 illustrated in FIG. 1. FIG. 19 is a diagram illustrating a second example of the range display of the authority information 103 by the authority verification device 1 illustrated in FIG. 1.

In a case where there is no job title of which decision amounts match between companies, the authority information presentation unit 115 may indicate a correspondence relationship of the decision authority as a range.

In the example illustrated in FIG. 18, it is assumed that an authority of a person with an authority of the company A be four million yen, while a manager having a decision authority of three million yen and a general manager having a decision authority of five million yen exist in the company B. Then, as indicated by a reference J1, in a case where the decision authority is displayed as a job title, "corresponding to be equal to or higher than manager X of OO department and equal to or lower than a general manager Z of ΔΔ " is displayed as the decision authority. In this way, it is possible to represent a position of the person with the authority of the company A as the job title of the company B. Furthermore, as indicated by a reference J2, in a case where the decision authority is displayed as an amount, "equal to or more than three million yen and equal to or less than five million yen" is displayed as the decision authority.

In the example illustrated in FIG. 19, it is assumed that the authority of the person with the authority of the company A be one million yen, while a manager having a decision authority of three million yen exist in the company B. Therefore, as indicated by a reference K1, in a case where the decision authority is displayed as the job title, "corresponding to be equal to or higher than manager X of OO department" is displayed as the decision authority. Furthermore, as indicated by a reference K2, in a case where the decision authority is displayed as the amount, "equal to or less than three million yen" is displayed as the decision authority.

### [A-2] Operation Example

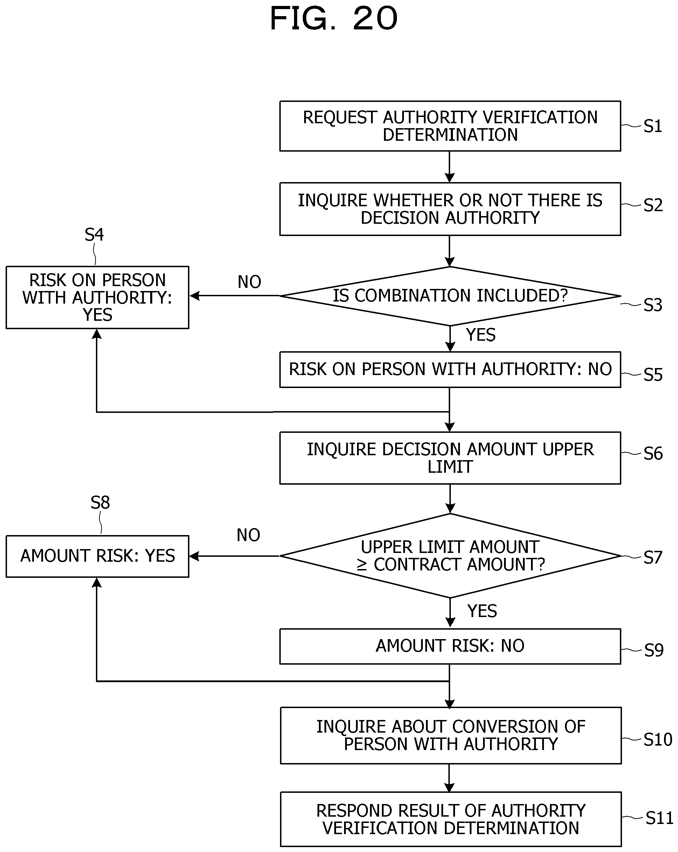

The authority information determination processing by the authority verification device 1 illustrated in FIG. 1 will be described with reference to the flowchart (steps S1 to S11) illustrated in FIG. 20.

The authority information determination unit 113 receives a request of authority verification determination (step S1).

The authority information determination unit 113 inquires whether or not there is a decision authority to the job title dictionary 142 (step S2).

The authority information determination unit 113 determines whether or not a combination of a contract type and a job title of a person with an authority is included in the job title dictionary 142 (step S3).

In a case where the combination of the contract type and the job title of the person with the authority is not included in the job title dictionary 142 (refer to No route in step S3), the authority information determination unit 113 determines that the person with the authority has a risk (step S4). Then, the processing proceeds to step S6.

On the other hand, in a case where the combination of the contract type and the job title of the person with the authority is included in the job title dictionary 142 (refer to Yes route in step S3), the authority information determination unit 113 determines that the person with the authority has no risk (step S5).

The authority information determination unit 113 inquires an upper limit amount of the decision amount to the inter-company authority conversion information 141 (step S6).

The authority information determination unit 113 determines whether or not the upper limit amount is equal to or more than a contract amount (step S7).

In a case where the upper limit amount is not equal or more than the contract amount (refer to NO route in step S7), the authority information determination unit 113 determines that the contract amount has a risk (step S8). Then, the processing proceeds to step S10.

On the other hand, in a case where the upper limit amount is equal to or more than the contract amount (refer to YES route in step S7), the authority information determination unit 113 determines that the contract amount has no risk (step S9).

The authority information determination unit 113 makes an inquiry to the inter-company authority conversion information 141 to change the person with the authority from a job title of a trading partner company to a job title of the own company (step S10).

The authority information determination unit 113 responds a result of the authority verification determination to a request source (step S11). Then, the authority information determination processing ends.

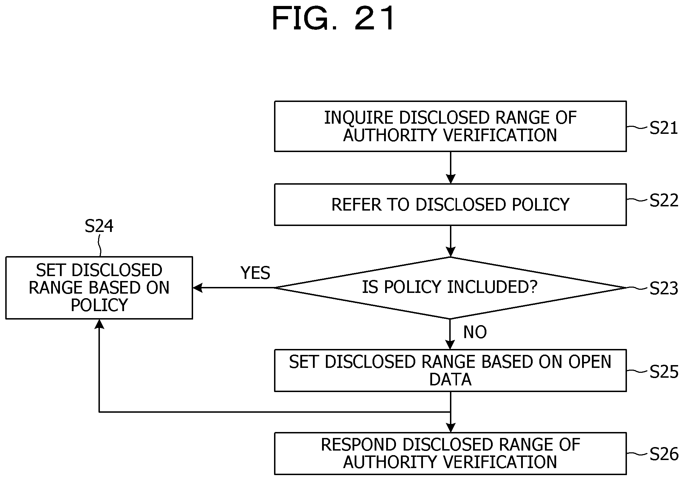

The authority information disclosure control processing by the authority verification device 1 illustrated in FIG. 1 will be described with reference to the flowchart (steps S21 to S26) illustrated in FIG. 21.

The authority information disclosure control unit 114 receives an inquiry regarding a disclosed range of authority verification (step S21).

The authority information disclosure control unit 114 refers to the disclosed policy 104 (step S22).

The authority information disclosure control unit 114 determines whether or not there is a policy between companies set in the disclosed policy 104 (step S23).

In a case where there is the policy between the companies (refer to YES route in step S23), the authority information disclosure control unit 114 sets the disclosed range of the authority verification based on the disclosed policy 104 (step S24).

On the other hand, in a case where there is no policy between the companies (refer to NO route in step S23), the authority information disclosure control unit 114 sets the disclosed range of the authority verification, based on the open data that is the personnel information 101 or the like in newspapers (step S25).

The authority information disclosure control unit 114 responds the disclosed range of the authority verification to an inquiry source (step S26). Then, the authority information disclosure control processing ends.

### [A-3] Effects

According to the control method, the authority verification device 1, and the control program in an example of the embodiment, for example, the following effects can be obtained.

The authority information determination unit 113 acquires contract document data including the company name and the job title name of the person with the authority of the contract partner company. Furthermore, the authority information determination unit 113 refers to the storage device 14 that stores the information indicating the plurality of kinds of decision abilities in association with the company name and the job title name for each job title of the company and acquires information indicating the decision ability associated with the company name and the job title name included in the acquired contract document data. Then, the authority information presentation unit 115 presents the acquired information indicating the decision ability, in association with the acquired contract document data.

As a result, it is possible to more accurately display the decision ability of the person with the authority included in the contract document. Then, since a contract flow of the contract partner company can be made to be transparent and reliability of the contract can be determined, a secure electronic contract can be made.

The authority conversion information scrutiny unit 112 deletes the data regarding the contract according to the personnel affairs in the past, from the information indicating the plurality of kinds of decision abilities, based on the personnel information 101. As a result, it is possible to exclude the data regarding the contract created according to the personnel affairs in the past from the inter-company authority conversion information 141, and it is possible to improve effectiveness of authority verification determination.

The authority conversion information scrutiny unit 112 deletes the data other than the data regarding the contract with the highest contract amount in a case where the plurality of pieces of data regarding the contract having the same approval path is included in the information indicating the plurality of kinds of decision abilities. A data volume of the inter-company authority conversion information 141 is reduced, and it is possible to efficiently perform the authority verification determination.

The authority conversion information scrutiny unit 112 deletes the data regarding the contract made by the job title that is estimated to have no contract authority from the information indicating the plurality of kinds of decision abilities. As a result, it is possible to improve the effectiveness of the authority verification determination.

The authority conversion information scrutiny unit 112 deletes the data regarding the contract for which a conflict occurs, from the information indicating the plurality of kinds of decision abilities, with reference to the court information 102. As a result, it is possible to improve the effectiveness of the authority verification determination.

The authority information presentation unit 115 converts the job title name of the partner company into the corresponding job title name of the own company in the information indicating the decision ability and presents the converted job title name. As a result, it is possible to easily recognize the result of the authority verification determination in the own company.

The authority information presentation unit 115 further converts the job title name of the own company into the decision limit amount corresponding to the job title name in the information indicating the decision ability and presents the decision limit amount. As a result, it is possible to represent the decision authority with a common index between companies.

### [B] Others

The disclosed technology is not limited to the embodiment described above, and various modifications may be made without departing from the spirit of the present embodiment. Each of the configurations and each of the processing according to the present embodiment may be selected as needed or may be combined as appropriate.

### CITATION LIST

### PATENT DOCUMENT

Patent Document 1: International Publication Pamphlet No. WO 2003/105002
Patent Document 2: Japanese Laid-open Patent Publication No. 2011-192295

### REFERENCE SIGNS LIST

100 authority verification system
101 personnel information
102 court information
103 authority information
104 disclosed policy
1 authority verification device
11 CPU
111 authority conversion information collection unit
112 authority conversion information scrutiny unit
113 authority information determination unit
114 authority information disclosure control unit
115 authority information presentation unit
12 memory unit
13 display control unit
130 display device
14 storage device
141 inter-company authority conversion information
142 job title dictionary
15 input IF
151 mouse
152 keyboard
16 external recording medium processing unit
160 recording medium
17 communication IF
2 electronic contract device
211 contract document creation unit
212 signature addition unit
213 history management unit
214 contract document presentation unit
241 transaction history

## Claims

1. A control method implemented by a computer, the method comprising:
acquiring contract document data that includes a company name and a job title name of a person with an authority of a contract partner company;
acquiring information that indicates a decision ability associated with the company name and the job title name included in the acquired contract document data, with reference to a storage unit that stores information that indicates a plurality of kinds of decision abilities for each job title of a company in association with the company name and the job title name; and
presenting the acquired information that indicates the decision ability, in association with the acquired contract document data.

2. The control method according to claim 1, further comprising
deleting data regarding a contract according to personnel affairs in the past, from the information that indicates the plurality of kinds of decision abilities, based on personnel information.

3. The control method according to claim 1 or 2, further comprising
deleting data other than data regarding a contract with a highest contract amount, in a case where there is a plurality of pieces of data regarding contracts that have the same approval path in the information that indicates the plurality of kinds of decision abilities.

4. The control method according to any one of claims 1 to 3, further comprising
deleting data regarding a contract made by a job title that is estimated to have no contract authority, in the information that indicates the plurality of kinds of decision abilities.

5. The control method according to any one of claims 1 to 4, further comprising
deleting data regarding a contract for which a conflict occurs from the information that indicates the plurality of kinds of decision abilities, with reference to court information.

6. The control method according to any one of claims 1 to 5, wherein
the presenting of the acquired information includes
converting a job title name of the partner company in the information that indicates the decision ability into a corresponding job title name in an own company, and
presenting the job title name.

7. The control method according to claim 6, wherein
the presenting of the acquired information includes
converting the job title name in the own company in the information that indicates the decision ability into a decision limit amount that corresponds to the job title name, and
presenting the decision limit amount.

8. An information processing apparatus comprising:
a first acquisition unit configured to acquire contract document data that includes a company name and a job title name of a person with an authority of a contract partner company;
a second acquisition unit configured to acquire information that indicates a decision ability associated with the company name and the job title name included in the acquired contract document data, with reference to a storage unit that stores information that indicates a plurality of kinds of decision abilities for each job title of a company in association with the company name and the job title name; and
a presentation unit configured to present the acquired information that indicates the decision ability, in association with the acquired contract document data.

9. The information processing apparatus according to claim 8, further comprising
a deletion processing unit configured to delete data regarding a contract according to personnel affairs in the past, from the information that indicates the plurality of kinds of decision abilities, based on personnel information.

10. The information processing apparatus according to claim 8 or 9, further comprising
a deletion processing unit configured to delete data other than data regarding a contract with a highest contract amount, in a case where there is a plurality of pieces of data regarding contracts that have the same approval path in the information that indicates the plurality of kinds of decision abilities.

11. The information processing apparatus according to any one of claims 8 to 10, further comprising
a deletion processing unit configured to delete data regarding a contract made by a job title that is estimated to have no contract authority, in the information that indicates the plurality of kinds of decision abilities.

12. The information processing apparatus according to any one of claims 8 to 11, further comprising
a deletion processing unit configured to delete data regarding a contract for which a conflict occurs from the information that indicates the plurality of kinds of decision abilities, with reference to court information.

13. The information processing apparatus according to any one of claims 8 to 12, wherein
the presentation unit converts a job title name of the partner company in the information that indicates the decision ability into a corresponding job title name in an own company and presents the job title name.

14. The information processing apparatus according to claim 13, wherein
the presentation unit further converts the job title name in the own company in the information that indicates the decision ability into a decision limit amount that corresponds to the job title name and presents the decision limit amount.

15. A control program comprising instructions which, when executed by a computer, cause the computer to perform processing, the processing including:
acquiring contract document data that includes a company name and a job title name of a person with an authority of a contract partner company;
acquiring information that indicates a decision ability associated with the company name and the job title name included in the acquired contract document data, with reference to a storage unit that stores information that indicates a plurality of kinds of decision abilities for each job title of a company in association with the company name and the job title name; and
presenting the acquired information that indicates the decision ability, in association with the acquired contract document data.

16. The control program according to claim 15, the processing further comprising
deleting data regarding a contract according to personnel affairs in the past, from the information that indicates the plurality of kinds of decision abilities, based on personnel information.

17. The control program according to claim 15 or 16, the processing further comprising
deleting data other than data regarding a contract with a highest contract amount, in a case where there is a plurality of pieces of data regarding contracts that have the same approval path in the information that indicates the plurality of kinds of decision abilities.

18. The control program according to any one of claims 15 to 17, the processing further comprising
deleting data regarding a contract made by a job title that is estimated to have no contract authority, in the information that indicates the plurality of kinds of decision abilities.

19. The control program according to any one of claims 15 to 18, the processing further comprising
deleting data regarding a contract for which a conflict occurs from the information that indicates the plurality of kinds of decision abilities, with reference to court information.

20. The control program according to any one of claims 15 to 19, wherein
the presenting of the acquired information includes
converting a job title name of the partner company in the information that indicates the decision ability into a corresponding job title name in an own company, and
presenting the job title name.

21. The control program according to claim 20, wherein
the presenting of the acquired information includes
converting the job title name in the own company in the information that indicates the decision ability into a decision limit amount that corresponds to the job title name, and
presenting the decision limit amount.
